# EUROPEAN PATENT SPECIFICATION

(11) **EP 0 934 113 B1**
(45) Date of publication and mention of the grant of the patent: **03.04.2002**
(21) Application number: 97913761.9
(22) Date of filing: 22.10.1997
(51) Int. Cl.: B01J 19/00

(54) **INVERSE FILTRATION APPARATUS AND METHOD OF USE**
UMKEHRFILTRATIONSVORRICHTUNG SOWIE ANWENDUNGSVERFAHREN
APPAREIL DE FILTRATION INVERSE ET PROCEDE D'UTILISATION

(30) Priority: 22.10.1996 US 29095 P; 20.08.1997 US 56501 P
(43) Date of publication of application: 11.08.1999
(73) Proprietor: CHIRON CORPORATION, Emeryville California 94608-2916 (US)
(72) Inventor: ZUCKERMANN, Ronald, N., Berkeley, CA 94708 (US); CHINN, Jason, P., Petaluma, CA 94954 (US); DESAI, Manoj, C., Pleasant Hill, CA 94523 (US); JONES, David, C., San Rafael, CA 94901 (US)
(74) Representative: Price, Nigel John King
(86) International application number: US9719301
(87) International publication number: WO9817384

(56) References cited:
- EP-A- 0 783 922
- WO-A-93/12427
- US-A- 5 565 173
- PATENT ABSTRACTS OF JAPAN vol. 17, no. 355 (C-1079), 6 July 1993 -& JP 05 049905 A (NIPPON HOECHST K.K.), 2 March 1993, -& DATABASE WPI Section Ch, Week 9314 Derwent Publications Ltd., London, GB; Class J04, AN 93-112070 XP002055994 & JP 05 049 905 (NIPPON HOECHST K.K.) , 2 March 1993
- PATENT ABSTRACTS OF JAPAN vol. 8, no. 138 (C-231), 27 June 1984 -& JP 59 048499 A (TORAY K.K.), 19 March 1984, -& DATABASE WPI Section Ch, Week 8417 Derwent Publications Ltd., London, GB; Class B04, AN 84-104893 XP002055995 & JP 59 048 499 (TORAY IND. INC.) , 19 March 1984

## Description

### Technical Field:

The invention relates generally to solid phase chemical synthesis. More particularly, the invention relates to a novel apparatus for use in chemical synthesis technologies such as for the synthesis of polypeptides, peptoids, polynucleotides, cyclic or heterocyclic organic compounds, and other syntheses utilizing solid phase organic chemistries.

### Background of the Invention:

Individual polymers or oligomers of amino acids, nucleotides, or the like, can be easily prepared using conventional solid phase synthetic technologies. For example, a defined polynucleotide can be prepared using conventional phosphoramidite or phosphotriester chemistry. Beaucage et al., *Tetrahedron Lett.* 22:1859-62 (1981); Itakura et al., *J. Biol. Chem.* 250:4592 (1975). A single defined polypeptide can be synthesized using Merrifield solid phase synthetic schemes. Merrifield, *J. Am. Chem. Soc.* 85:2149-2154 (1963); Tam et al., *The Peptides,* Academic Press (New York), pp. 185-249 (1987). Another well-known method for achieving solid-phase peptide synthesis uses 9-fluorenylmethoxycarbonyl (Fmoc) protecting groups on the amino acids (Meienhofer et al., *Int. J. Pept. Protein Res.* 13:35 (1979), Atherton et al., *Bioorg. Chem.* 8:351 (1979)). The peptide is immobilized on any of a wide variety of commercially available polystyrene resins (Wang, S., *J. Am. Chem. Soc.* 95:1328 (1973), Mergler et al., *Tetrahedron Lett.* 29:4005 (1988), Albericio et al., *Int. J. Pept. Protein Res.* 30:206 (1987)).

Methods for the systematic synthesis of a multiplicity of polymers to screen for pharmacological or biological activity have also been developed. Particularly, combinatorial libraries can be prepared containing a large number of polymers using "resin-splitting" or "mix/split" techniques. Furka et al., *Int. J*. *Peptide Protein Res.* 37:487-493 (1991); Lam et al., *Nature* 354:82-84 (1991). Resin-splitting strategies have also been used to generate mixtures of lower complexity to study ligand-receptor binding activity and enzyme activity structure-activity relationships. Zuckermann et al., *Proc. Natl. Acad. Sci. USA* 89:4505-4509 (1992); Peuthory et al., *Proc. Natl. Acad. Sci. USA* 88:11510-11514 (1991). In addition, methods for producing libraries of cyclic or heterocyclic organic compounds using resin-splitting procedures have been described, for example, in commonly assigned WO-A-9 640 201.

Although these methods of synthesis may be routine, they are quite laborious. The difficulty in conducting such syntheses becomes magnified when it is necessary to prepare many specified polypeptide or polynucleotide sequences in parallel, e.g., in the synthesis of combinatorial libraries, such as those containing 10⁶ or more components. Accordingly, a number of automated systems for the synthesis of polypeptides and other polymers or oligomers have been developed. One automated system described in Schnorrenberg et al., *Tetrahedron* 45:7759 (1989) relates to the synthesis of peptides on resin using several automated arms to withdraw solvent from a reaction vessel, to add a solvent, and to wash and mix reagents. Another automated system described in U.S. Patent No. 5,240,680 to Zuckermann et al. relates to the synthesis of polypeptides using an apparatus having structure for automated transfer of reaction solutions into and out of a cleavage vessel, transfer of peptide solution from the cleavage vessel to the extraction vessel, and transfer of extraction solvent into and out of the extraction vessel.

The use of such automated systems in synthetic polymer production avoids a great deal of manipulation and increases the efficiency of synthetic polymer production. However, even with automated systems, a number of steps must still be carried out manually, requiring significant effort and limiting the overall rate of synthetic polymer production. For example, in some automated systems, steps such as rinsing resin from reaction vessels into disposable fritted tubes, drying the resin and transferring the dried resin to new vessels, are problematic with respect to production timing, resin conservation, ease of product identification, and the like. Other automated systems require expensive reaction vessels fitted with frits and include elaborate tubing and valving. These features inherently limit the number of reaction vessels which can be used at a single time, necessitate extensive washing between syntheses, and are generally impractical for the preparation of combinatorial libraries or for large scale polymer production.

Accordingly, there remains a need for an apparatus to synthesize polypeptides, peptoids, polynucleotides, cyclic or heterocyclic organic compounds, and other chemical species which can be prepared using solid phase synthesis techniques, which avoids the necessity for extensive reaction vessel transfers and/or expensive fritted vessels.

EP-A-0 783 922 discloses a reactor apparatus for synthesis of peptides comprising a suction tube and an inlet channel. The inlet channel is arranged to provide slurry to a vial to which the suction tube is attached.

In a first aspect of the present invention there is provided an inverse filtration head for gas and fluid handling, comprising:
(a) a plurality of coaxial conduit pairs in substantially parallel spaced-apart relationship, each conduit pair comprising (i) an influent conduit having a first and a second terminus and an inlet aperture arranged proximal to said second terminus, and (ii) an effluent conduit disposed coaxially within the influent conduit and having a first and a second terminus, wherein the first terminus of the effluent conduit extends beyond the first terminus of the influent conduit and includes a filter through which nonparticulate fluids may freely pass; and
(b) a manifold body comprising a plurality of coaxial coupling seats which hold and retain the second termini of the coaxial conduit pairs.

In a second aspect of the present invention there is provided an inverse filtration device, comprising:
(a) elongate handle means having first and second ends;
(b) the filtration head of claim 1 attached to the first end of the handle means; and
(c) control means attached to the second end of the handle means, wherein said control means comprises actuation means operably connected to the external vacuum means, external gas delivery means, external fluid receiving means and the external fluid delivery means, thereby allowing remote actuation of vacuum, gas delivery or fluid delivery from said external means to the filtration head.

In a third aspect of the present invention there is provided an inverse filtration head for gas and fluid handling, comprising:
(a) a plurality of conduit pairs in substantially parallel spaced-apart relationship, each conduit pair comprising (i) an influent conduit having an upstream and a downstream terminus, and (ii) an effluent conduit having an exterior surface and an upstream and a downstream terminus, wherein the major axis of the influent conduit is transverse to the major axis of the effluent conduit and the downstream terminus of the influent conduit is arranged near an upper portion of the effluent conduit to enable discharge from the downstream terminus of the influent conduit to travel along a portion of the exterior surface of the effluent conduit thereby to remove residues from the exterior surface of the effluent conduit;
(b) a filter means disposed over the downstream terminus of the effluent conduit and through which nonparticulate fluids may freely pass; and
(c) a manifold body comprising a plurality of coupling seats which hold and retain the conduit pairs.

In a fourth aspect of the present invention there is provided an inverse filtration device, comprising:
(a) elongate handle means having first and second ends;
(b) the filtration head of claim 22 attached to the first end of the handle means; and
(c) control means attached to the second end of the handle means, comprising actuation means operably connected to the external vacuum means, external gas delivery means, external fluid receiving means and the external fluid delivery means, thereby allowing remote actuation of vacuum, gas delivery or fluid delivery from said external means to the filtration head.

In one embodiment of the invention, an inverse filtration head for conducting chemical syntheses involving a sequence of reaction steps to be conducted on a solid phase is provided. The inverse filtration head is used for gas and fluid handling over the course of the chemical syntheses. The filtration head includes a plurality of coaxial effluent/influent conduit pairs which are arranged in substantially parallel spaced-apart relation to each other. Each conduit pair includes an influent conduit with an effluent conduit coaxially disposed therein. The effluent conduit extends from the downstream portion of the influent conduit. A filter means is fitted onto the downstream terminus of the effluent conduit to prevent the passage of particulate matter into the effluent conduit. The manifold chambers are filled from, or drained into, externally associated reservoirs or containment means which house the various fluids and gasses.

The spacing of the coaxial conduit pairs can be set to cooperate with any number of order arrays of reaction vessels, for example, a 96 vial 8x12 row matrix or a 364 vial 16x24 row matrix. Thus, the conduit pairs are provided in sets of 2 to yield filtration heads that are capable of simultaneously working 2, 6, 8, 12 or more reaction vessels during the aspiration, washing and/or solvent addition steps of a chemical synthesis.

In a related embodiment of the invention, an inverse filtration head is provided which includes a plurality of transversely coupled effluent/influent conduit pairs which pairs are arranged in substantially parallel spaced-apart relation to each other. Each conduit pair includes an effluent conduit with an influent conduit arranged in transverse relation with an upper portion of the effluent conduit. A filter means is fitted onto the downstream terminus of the effluent conduit to prevent the passage of particulate matter into the effluent conduit.

Accurate and internally consistent gas, liquid, and vacuum delivery to and from a plurality of reaction vessels via the inverse filtration head is ensured using a manifold body which allows communication between all effluent conduits with a second manifold chamber. A radial solvent splitter is used to ensure internally consistent delivery of fluids from the transversely arranged influent conduits. In a preferred embodiment, the radial solvent splitter comprises an internal check valve.

The transversely coupled conduit pairs can be spaced to cooperate with any ordered array of reaction vessels, e.g., 8x12 or 16x24 matrices, and are thus provided in sets of 2 to work 2, 6, 8, 12 or more reaction vessels simultaneously.

In another embodiment of the invention, an inverse filtration device is provided. The device includes an inverse filtration head and a control panel having actuation means for operating the filtration head. The control panel and inverse filtration head are positioned relative to each other on elongate handles which allow the device to be positioned and operated in a variety of orientations. The control panel is operably connected to external vacuum means, gas delivery means and fluid delivery means, allowing all operations involved with aspirating, washing, or adding solvents with the inverse filtration head to be conducted with simple manipulations using the device.

In yet another embodiment, an inverse filtration apparatus is provided. The apparatus includes the inverse filtration device of the invention, a valve control box operably connected with and controlled by the control means, and associated fluid delivery means, gas delivery means and a vacuum source. In one particular embodiment, the inverse filtration apparatus includes an inverse filtration device mounted on an automated arm. Operation of the apparatus can thus be fully automated.

Additional objects, advantages and novel features of the invention will be set forth in part in the description that follows, and in part will become apparent to those skilled in the art upon examination of the following.

### Brief Description of the Figures

Figure 1 is a pictorial representation of a first embodiment of an inverse filtration head showing portions of the filtration head in cut-away view.

Figure 2 is a plan view of an inverse filtration device having an inverse filtration head and a control means which are positioned relative to each other on a set of elongate handles.

Figure 3 is a side elevational view of the device of Figure 2, showing the left side of the inverse filtration device.

Figure 4 is a side elevational view of the device of Figure 2, showing the right side of the inverse filtration device.

Figure 5 is a top elevational view of the inverse filtration device of Figure 2.

Figure 6 is a schematic representation of an inverse filtration apparatus having an inverse filtration head, a hand control panel, a valve box, and associated fluid, gas and vacuum sources interconnected with the control panel and inverse filtration head by way of tubing lines.

Figure 7 is a cut-away side view of a second embodiment of an inverse filtration head which includes a radial solvent splitter.

Figure 8 is a cut-away frontal view of the inverse filtration head of Figure 7 showing portions of the filtration head.

Figure 9 is a side elevational view of the device of Figure 7.

Figure 10 is a cut-away side elevational view of the radial solvent splitter of the device of Figure 7.

Figure 11 is an exploded view of the radial solvent splitter of Figure 10.

Figure 12 is a pictorial representation of an internal check valve assembly contained within the radial solvent splitter of Figure 10, wherein the check valve is in a closed position.

Figure 13 is a pictorial representation of an internal check valve assembly contained within the radial solvent splitter of Figure 10, wherein the check valve is in an open position.

### Detailed Disclosure of the Invention

The practice of the methods of the present invention will employ, unless otherwise indicated, conventional techniques of synthetic organic chemistry, including solid-phase synthesis, peptide synthesis, polynucleotide synthesis, polysaccharide synthesis, and other solid phase organic chemistries, that are within the skill of the art. Such techniques are explained fully in the literature. *See, e.g.*, Thompson et al., "Synthesis and Applications of Small Molecule Libraries," *Chem Rev.* 96:55-600 (1996); Terrett et al., "Combinatorial Synthesis - The Design of Compound Libraries and Their Application to Drug Discovery," *Tetrahedron* 51(30):8135-8173 (1995); Kirk-Othmer's Encyclopedia of Chemical Technology; House's Modern Synthetic Reactions; C.S. Marvel and G. S. Hiers' text, *ORGANIC SYNTHESIS,* Collective Volume 1; Oligonucleotide Synthesis (M.J. Gait, ed., 1984); and Hermkens et al. (1996) *Tetrahedron* 52:4527-4554.

### Definitions:

Before the present invention is disclosed and described in detail, it is to be understood that this invention is not limited to specific synthesis formats, materials or reagents, as such may, of course, vary. It is also to be understood that the terminology used herein is for the purpose of describing particular embodiments only and is not intended to be limiting.

It must be noted that, as used in the specification and the appended claims, the singular forms "a," "an" and "the" include plural referents unless the context clearly dictates otherwise. Thus, for example, reference to "a reaction vessel" includes two or more such vessels, reference to a solvent reservoir includes two or more reservoirs, reference to "an actuation means" includes two or more such actuation means, and the like.

In this specification and in the claims which follow, reference will be made to a number of terms which shall be defined to have the following meanings:

The term "monomer" as used herein refers to a chemical entity that may be covalently linked to one or more other entities to form an oligomer. Monomers are subunits that include, for example, amino acids, nucleotides, saccharides, alkylators, nucleophiles, and the like.

The term "solid phase" intends any solid support or substrate on which the reaction steps of chemical syntheses involving a sequence of reaction steps can be carried out. Thus, the term includes particulate substrates such as polystyrene resins which have traditionally been employed in standard Fmoc chemical syntheses.

The term "substantially parallel" as used herein to describe an array of effluent/influent conduit pairs refers to an arrangement of such conduit pairs wherein the novel inverse filtration apparatus of the invention can be used to simultaneously actuate the aspiration or draining of a plurality of reaction vessels in an ordered array, or the filling and/or washing of such vessels, using the devices described herein.

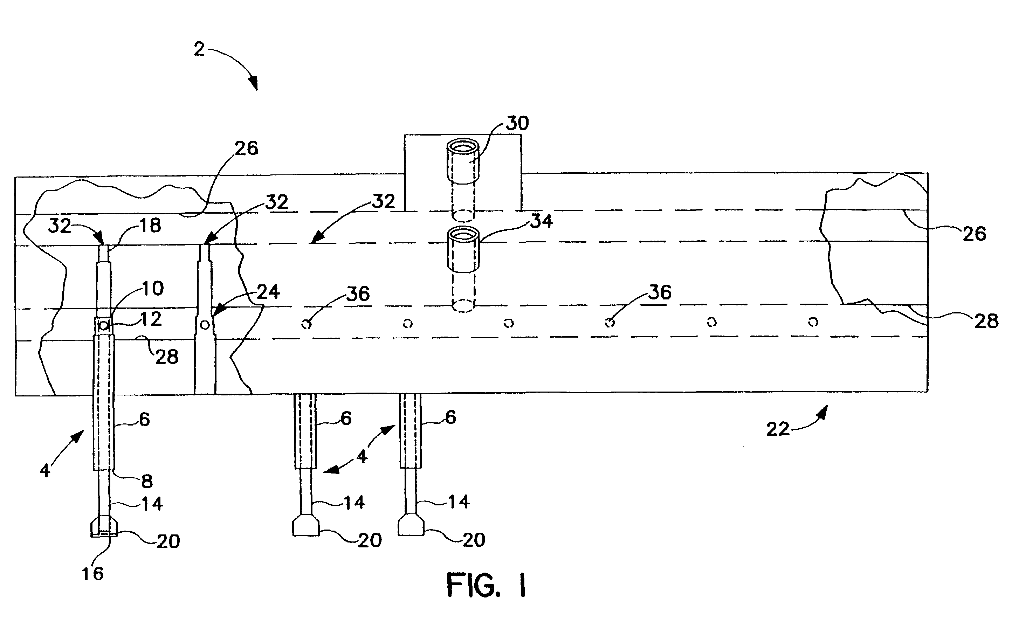

In one embodiment of the invention, an inverse filtration head for use in conducting parallel chemical syntheses is provided. Referring to Figure 1, one such inverse filtration head for gas and fluid handling is generally indicated at **2**. The filtration head includes a plurality of coaxial effluent/influent conduit pairs **4** arranged in substantially parallel spaced-apart relation to each other. Each conduit pair **4** includes an influent conduit **6** and an effluent conduit **14**. Influent conduit **6** includes a first terminus **8**, a second terminus **10**, and an inlet aperture **12** that is disposed at or near the second terminus **10**. Effluent conduit **14** is disposed coaxially within influent conduit **6**, and includes a first terminus **16** and a second terminus **18** wherein the first terminus **16** of the effluent conduit extends beyond the first terminus **8** of influent conduit **6**. A filter means **20** is arranged over the first terminus **16** of effluent conduit **14**. Filter means **20** allows the passage of nonparticulate fluids into effluent conduit **14** via the first terminus **16** thereof.

Effluent conduit **14** and influent conduit **6** are comprised of any suitable material, preferably materials that are suitably resistant to the types of chemicals typically used in polymer synthesis. In particular, the coaxial effluent and influent conduits can be comprised of concentric stainless steel tubes.

A plurality of effluent/influent conduit pairs **4** are arranged in a manifold body **22** which includes a plurality of coaxial coupling seats **24** adapted to accept and retain the second termini **10** and **18** of the coaxial effluent/influent conduit pairs. Manifold body **22** comprises an upper chamber **26** and a lower chamber **28**. The upper chamber **26** includes means **30** for communicating with externally associated devices such as vacuum sources, gas delivery means and fluid receiving means. A plurality of ports **32** in upper chamber **26** provide fluid communication between the chamber and the second terminus **18** of the effluent conduits **14**. The ports **32** enable passage of gasses and fluids between external vacuum means, gas delivery means and fluid receiving means, the chamber **26**, and the effluent conduits **14**, to facilitate the removal of fluids from reaction vessels.

The lower chamber **28** includes means **34** for communicating with externally associated fluid delivery means. In addition, a plurality of ports **36** in the lower chamber **28** provide fluid communication between the chamber and inlet aperture **12** of influent conduit **6**. The ports **36** enable passage of fluids from an associated external fluid delivery means, through the lower chamber **28** and into influent conduit **6**, for delivery into a reaction vessel where synthetic chemistries are being carried out.

The manifold body **22** can be formed from any suitable substrate which is preferably selected for durability, ease of construction, and low overall weight since the filtration head can be designed to be hand-positioned and actuated throughout chemical syntheses. The manifold substrate should also be chemically inert and sufficiently resistant to chemicals commonly used in the preparation of polymers. Exemplary materials include polyethylenes, particularly high density polyethylenes, or other inert polymers such as poly(tetrafluoroethylene) (such as may be obtained commercially under the name TEFLON®), poly(chlorotrifluoroethylene) (such as may be obtained commercially under the name Kel-F®), or polyether ester ketone (PEEK).

The inverse filtration head **2** simplifies a number of steps in synthetic polymerization reactions, particularly aspiration and introduction of reaction solvents and/or washing liquids into reaction vessels, washing of resins, and rinsing reaction vessels. The coaxial effluent/influent conduit pairs **4** have adequate length and overall diameter so as to cooperate with standard reaction vessels, such as any commonly available, non-fritted reaction vial or tube. Specifically, the effluent conduit **14**, which extends the furthest from the manifold body **22**, is designed to contact and come to rest on the resin or other solid-phase disposed at the bottom of the reaction vessel. Effluent conduit **14** is fitted with an appropriate filter **20** at the downstream, first terminus **16** thereof. Appropriate filters include, for example, a screen or frit which allows aspiration of solvents and/or washing of fluids from the reaction vessels without concomitant aspiration of the resins. The screen or frit can be comprised of stainless steel, poly(tetrafluoroethylene), polyethylene or any other chemically inert material. Typically, the filter mesh is from about 20 to about 50 µm in size, preferably about 20 µm. However, the particular filter mesh used will depend on the size of the solid phase substrate employed in the synthesis methods, wherein it is desirable to have as high of a flow rate as possible through the filter since the filtration head can be designed to be hand-positioned and manipulated.

Alternatively, the filter **20** comprises a housing that is compression fit onto the first terminus **16** of effluent conduit **14**. The filter housing has an inner diameter that allows the filter **20** to be compression fit onto the effluent conduit using ordinary hand pressure. The housing contains an integral frit filter formed from, for example, stainless steel. If desired, the housing can be comprised of a machinable, hard and chemically inert polymer material, for example Kel-F® or PEEK, and can be easily fitted onto, and removed from, the terminus **16** by hand. In this manner, replacement of a clogged filter is easily accomplished by simply pulling the filter **20** off of the end of the effluent conduit and replacing it with a fresh filter using moderate pressure.

Influent conduit **6**, which coaxially encompasses the upstream portion of effluent conduit **14**, is designed to expel solvents, washing fluids and/or gases from the downstream, first terminus **8** thereof. Expelled solvents, fluids or gasses travel down the downstream portion of effluent conduit **14** which extends from the influent conduit, thereby removing residual solvents, washing liquids or resin particles from the exterior surface of the effluent conduit.

The coaxial effluent/influent conduit pairs **4** can be arranged in substantially parallel, spaced-apart relation to each other in the manifold body **22** such that the pairs correspond with the spacing of wells in standard reaction plates, e.g., 96 or 385 well reaction plates, or correspond with the spacing of a particular group or array of reaction vessels, e.g., columns and/or rows, to facilitate the preparation of known polypeptide or polynucleotide sequences, or the preparation of combinatorial libraries. As will be readily understood by those skilled in the art upon reading this specification, manifolds containing 2, 6, 8 or 12 conduit pairs are particularly useful when standard reaction plates (e.g., 36, 96, or 364 well plates) are employed in the chemical syntheses.

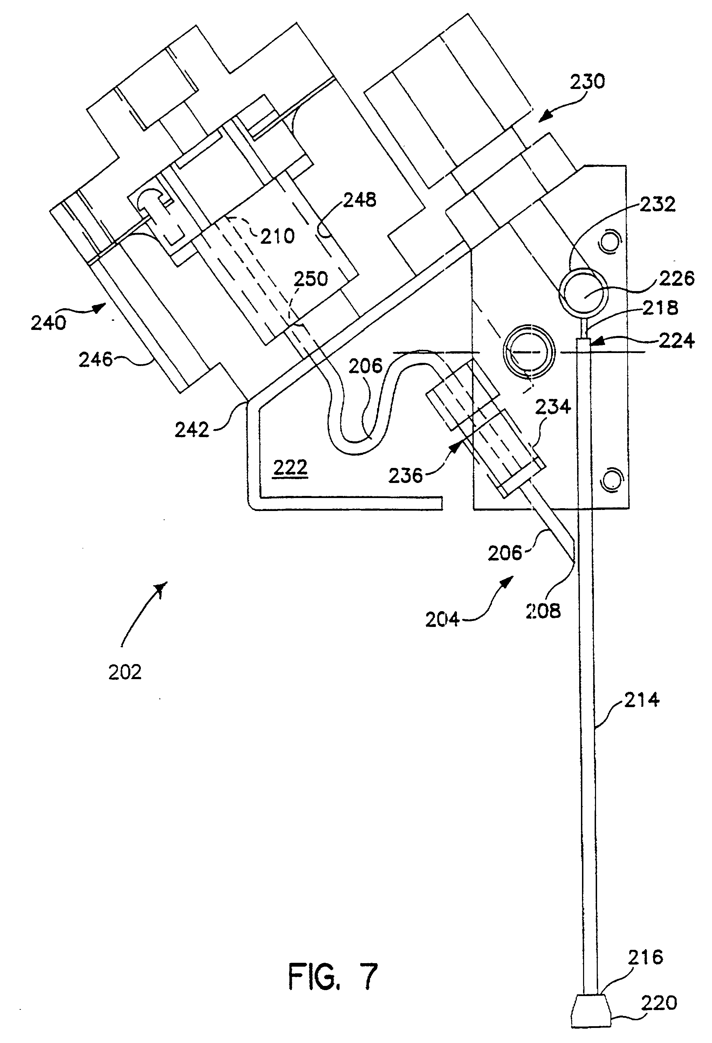

Referring now to Figure 7, another inverse filtration head for gas and fluid handling is generally indicated at **202**. This particular filtration head is adapted to provide accurate and substantially equivalent solvent delivery from a single solvent source through all influent conduits. In order to accommodate such accurate solvent delivery, the filtration head **202** makes use of a multiposition radial solvent splitter which contains an integral check valve.

More particularly, the filtration head **202** includes a plurality of transversely opposed effluent/influent conduit pairs **204** arranged in substantially parallel spaced-apart relation to each other. Each conduit pair **204** includes an influent conduit **206** and an effluent conduit **214**. The effluent conduit **214** has a first, downstream terminus **216** and a second, upstream terminus **218**. A filter means **220** is arranged over the downstream terminus **216** and allows passage of nonparticulate fluids into the effluent conduit **214** via the downstream terminus **216**.

Appropriate filters for use in the filter means **220** include a screen or frit which allows aspiration of solvents and/or washing of fluids from the reaction vessels without concomitant aspiration of the resins. The screen or frit can be comprised of stainless steel, poly(tetrafluoroethylene), polyethylene or any other chemically inert material. As described above, the particular filter mesh used will depend on the size of the solid phase substrate employed in the synthesis methods. Alternatively, the filter means **220** can comprise a housing that is compression-fit onto the downstream terminus **216** of effluent conduit **214**. The filter housing has an inner diameter that allows it to be compression fit onto the effluent conduit using ordinary hand pressure, and contains an integral frit filter. If desired, the housing can be comprised of a machinable, hard and chemically inert polymer material, for example Kel-F® or PEEK.

The influent conduit **206** also has a first, downstream terminus **208** and a second, upstream terminus **210**. As can be seen in Figure 7, each influent and effluent conduit coupling which makes up a conduit pair **204** is arranged such that the major axis of the influent conduit **206** is transverse to the major axis of the effluent conduit **214**, and the downstream terminus **208** of the influent conduit is adjacent to an upper portion of the effluent conduit. In this manner, solvents, fluids or gasses that are discharged from the influent conduit travel down a substantial portion of the effluent conduit and remove residual solvents, washing liquids or resin particles from the exterior surface of the effluent conduit. Furthermore, sending the liquids or gasses down the length of the effluent conduit, instead of directly into the bottom of a reaction vessel, prevents resin particles from being driven up the sides of the reaction vessel and out of contact with washing liquids and/or solvents.

The effluent conduit **214** and influent conduit **206** can be comprised of any suitable material, preferably materials that are sufficiently resistant to chemicals used in polymer syntheses. For example, the effluent conduit can be comprised of a stainless steel tube, and the influent conduit can be comprised of poly(tetrafluoroethylene) tubing.

Referring now to Figures 7-9, a plurality of effluent/influent conduit pairs **204** are arranged in a manifold body **222** which includes a plurality of coupling seats **224** adapted to accept and retain the upstream terminus **218** of the effluent conduits. The manifold body **222** has a chamber **226** which includes means **230** for communicating with externally associated devices such as vacuum sources, gas delivery means and fluid receiving means. A plurality of ports **232** in chamber **226** provide fluid communication between the chamber and the upstream terminus **218** of effluent conduits **214**. The ports **232** enable passage of gasses and fluids between external vacuum means, gas delivery means and fluid receiving means, the chamber **226**, and the effluent conduits **214**, to facilitate the removal of fluids from reaction vessels.

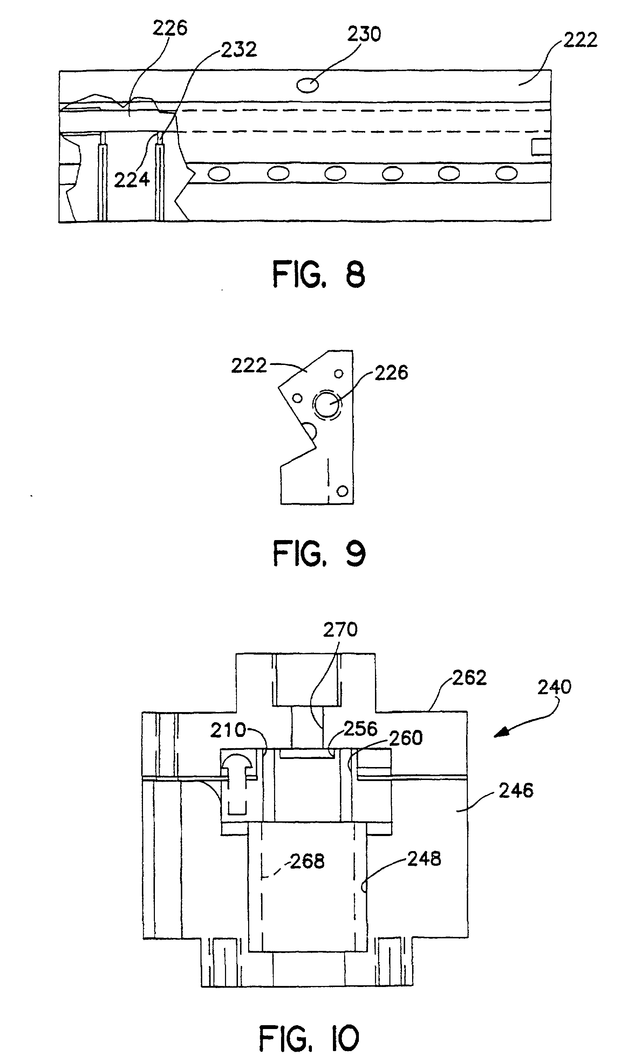

The inverse filtration head **202** further comprises a radial, multiposition solvent splitter which is used to provide even delivery of solvents or washing liquids from all influent conduits **206**. Referring to Figures 7 and 10, a radial solvent splitter, generally indicated at **240**, is coupled at its downstream end **242** to the manifold body **222**. At the upstream end of the solvent splitter, means are provided for communication with an externally associated solvent delivery means. When the filtration head is being used in chemical syntheses, the solvent splitter **240** is constantly charged with solvent from the associated solvent delivery system. Thus, the radial solvent splitter **240** contains an integral check valve which provides for both even solvent distribution from the solvent splitter, and the prevention of dribbling from, or siphoning into, the solvent splitter after or in between solvent deliveries. Dribbling or siphoning problems could occur in the absence of the check valve due to tilting and/or moving the charged solvent splitter when the inverse filtration head is moved into alignment with a new set of reaction vials, or moved towards or away from the reaction vials at the start or finish of a solvent delivery operation.

As seen in Figure 7, the influent conduit **206** extends between the solvent splitter **240** and the manifold body **222**. In one embodiment, the influent conduit is positioned within a coupling seat **234** in the manifold body using a compression fitting such as a threaded coupler **236**. The coupler **236** can be comprised of a compressible polymeric material such as poly(ethylenetetra-fluoroethylene), for example Tefzel®, and can be configured as a ferrule. In this configuration, the influent conduit passes through a central aperture in the ferrule which has external threads. As the ferrule is threaded into the coupling seat **234** in the manifold body, the body of the ferrule compresses about the influent conduit, resiliently coupling the conduit to the manifold.

The solvent splitter **242** is comprised of a substantially cylindrical body **246** having an internal valve chamber **248** which houses a portion of influent conduit **206**. In the embodiment depicted in Figure 7, a plurality of influent conduits pass into the valve chamber **248** via ports **250** to communicate at their upstream termini **210** with an externally associated fluid delivery means. In this manner, fluids can be passed from the external delivery means simultaneously into each influent conduit for delivery into a plurality of reaction vessels where synthetic chemistries are being carried out.

Referring now to Figures 10-13, fluid delivery through the solvent splitter **240** is accomplished by way of a spring-actuated check valve assembly, generally indicated at **252**, that is positioned within the radial solvent splitter **240**. The check valve assembly **252** includes a piston member **254**, having a cylindrical recess **256** in the top surface **258** thereof. A plurality of apertures **260** extend through the piston member **254** and provide fluid communication between an area within the check valve that is immediately above the top surface **258** of the piston, and the upstream terminus **210** of influent conduit **206**. The apertures **260** further provide a coupling seat for the influent conduits **206**, and are thus sized to provide a fluid- and liquid-tight seal between the body of piston member **254** and the external surface of the influent conduits.

The check valve assembly further includes a cover **262** which contains, on the bottom thereof, a mating surface **264** for the top surface **258** of the piston member **254**. The cover **262** is tightly coupled to the cylindrical body **246** of the solvent splitter by way of resilient fastening means, for example threaded fasteners or spring clamps, in order to provide a liquid- and pressure-tight seal between the two components. Furthermore, coupling of the cover to the solvent splitter body brings the bottom surface **266** of the piston member **254** into tensioned contact with a compression spring **268** that is contained within the chamber **244** of the solvent splitter. The compression spring provides a bias which forces the top surface **258** of the piston member **254** into sealing relationship with the mating surface **264** of the cover **262**, establishing a closed position for the check valve assembly.

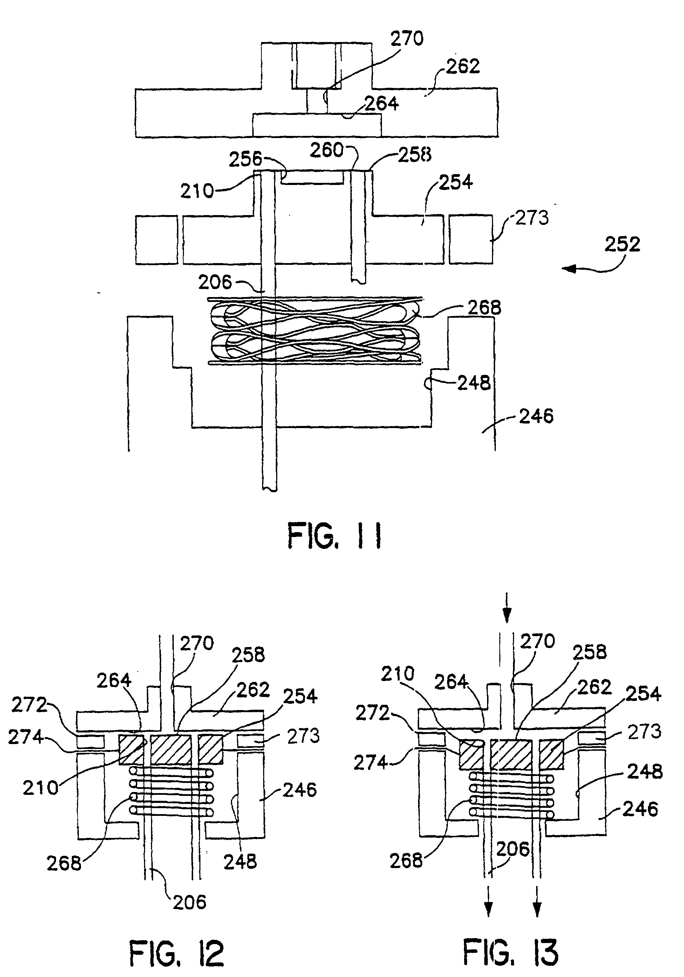

Referring particularly to Figures 12 and 13, wherein the check valve assembly **252** is depicted in closed and open positions, respectively, fluid delivery through the check valve proceeds as follows. When the check valve assembly is in its closed position, a fluid, such as a solvent or wash fluid, delivered from an external fluid delivery means under pressure, passes into an aperture **270** in the cover **262** to contact the recess **256** in the top surface of the piston member **254**. As seen in Figure 12, when the check valve assembly is in such a closed position, the upstream terminus **210** of the influent conduit **206** is sealably held against the mating surface **264** of the cover **262**, preventing the passage of fluids into the influent conduit. When the delivery pressure of the fluid passing into the aperture **270** exceeds the biased tension pressure provided by the compression spring **268**, the spring compresses, allowing the piston member to travel into the body **246** of the solvent splitter, bringing the upstream terminus **210** of the influent conduit out of contact with the mating surface of the cover, and allowing passage of fluids into the influent conduit **206** for delivery into a reaction vessel. This motion of the piston member brings the check valve assembly into the open position depicted in Figure 13. Fluids can thus be delivered through the influent conduit as long as the fluid delivery is maintained at a higher pressure than the bias pressure provided by the compression spring. When fluid delivery is completed, the compression spring travels back to its closed position, thereby again sealing off the upstream terminus **210** of the influent conduit.

As will be understood by those of ordinary skill in the art upon reading this specification, any number of apertures **260** can be provided in the piston member to accommodate varying numbers of influent conduits. In this regard, the apertures are evenly spaced relative to the center of the recess **256** in the piston member, and therefore are evenly spaced with respect to the fluid inlet to provide for substantially equivalent fluid delivery into each influent conduit. In one particular embodiment, eight apertures **260** are positioned radially around the recess **256** and are spaced equidistant from each other and the center of the recess.

In addition, a first gasket **272** can be employed to provide a liquid- and pressuretight seal between the interfacing surfaces of the cover **262** and a top surface of a spacer **273** that is arranged between the cover and the body **246** of the solvent splitter, and a second gasket **274** can be arranged between a bottom surface of the spacer **273** and the interfacing surface of the solvent splitter body **246**. The first gasket **272** can be comprised of any suitable, chemically inert material that is sufficiently resistant to those chemicals used in the preparation of polymers, for example, a poly(tetrafluoroethylene) material such as Teflon®. The second gasket **274** is also selected for optimum chemical resistance and inertness; however, this gasket material must also be flexible to allow travel of the piston between the open and closed positions of the check valve assembly. One particularly flexible, and sufficiently inert elastopolymer material that can be used to form the second gasket, then, is the polymer available under the tradename Kalrez®.
Such gasket materials provide for a fully concentric, even travel of the piston, thus enabling an even flow of fluids through all influent conduits.

The piston member **254,** cover **262,** and the body **246** of the solvent splitter are each comprised of a suitable substrate which is preferably selected for durability, ease of construction, and low overall weight. The selected substrates should also be chemically inert and sufficiently resistant to chemicals commonly used in the preparation of polymers. Exemplary materials include polyethylenes, particularly high density polyethylenes, or other inert polymers such as poly(tetrafluoroethylene), poly(chlorotrifluoroethylene) (such as may be obtained commercially under the name Kel-F®), or polyether ester ketone (PEEK).

Selection criteria for the compression spring **268** include, for example, a spring bias sufficient to provide a cracking pressure (that pressure needed to dislodge the check valve assembly from its closed position) of about 34.5 - 55.2 kPa (5-8 psi), and a spring rate sufficient to operate under normal fluid delivery opening pressures (that pressure required to maintain the check valve assembly in its open position). Suitable compression springs include flat wire springs, preferably having squared-shim ends to provide non-torsional spring travel, and can be comprised of carbon steel or stainless steel. Such flat wire compression springs are available from the Smalley Steel Ring Company, Wheeling, IL. If desired, the spring bias can be increased by placing one or more shims between the bottom of the compression spring and the bottom of the chamber **248**. The compression spring **268** is generally compressed in the valve assembly to provide a stroke of about 1.6 mn (1/16 of an inch). The spring stroke is limited in this manner to avoid creation of a large volume of liquid which would be expelled from the check valve assembly upon the opening thereof. This stroke limitation, in turn, manifests as a delay between the cracking pressure in the valve and actual liquid flow through the valve assembly.

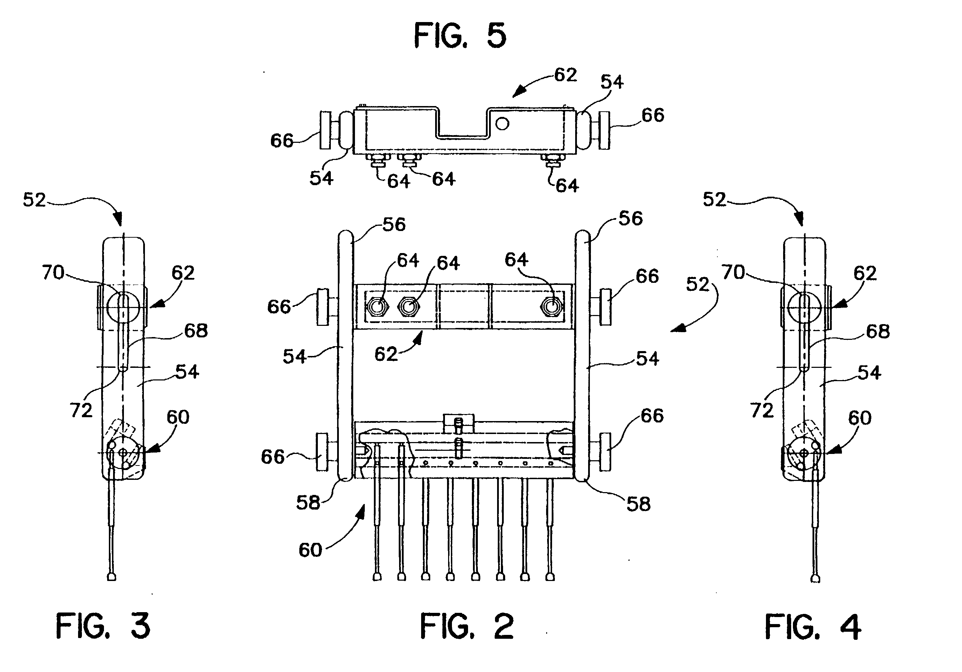

In another embodiment of the invention, an inverse filtration device is provided. Referring now to Figures 2, 3, 4 and 5, one such filtration device is generally indicated at **52**. The device **52** includes a pair of elongate handle means **54**, each having first and second ends, **56** and **58**, respectively. An inverse filtration head **60**, such as the filtration head depicted in either Figure 1 or Figure 7, is attached at or near the first end **56** of handle means **54**. The filtration device **52** further includes control means **62** attached at or near the second end **58** of handle means **54**. Referring particularly to Figure 2, a number of actuation means **64** are disposed on the control means **62**, wherein the actuation means are operably connected to external vacuum means, external gas delivery means, external fluid receiving means and external fluid delivery means. The actuation means are used to switchably direct fluid communication between such external devices and the filtration head **60** to direct gas and/or fluid delivery to and from the filtration head for use in chemical syntheses.

Referring particularly to Figure 2, the inverse filtration head **60** and the control means **62** can be connected to handle means **54** using adjustable connectors which cooperate with suitable receiving means in the filtration head and control means. In particular, threaded bolts or pins **66** are used to couple the filtration head and control means to handle means **54**. When the bolts **66** are loosened, the filtration head **60** and control means **62** can be pivoted relative to the handle means **54** and to each other, allowing the device components to be fixed into a number of operating positions to accommodate individual preferences. The ability to adjust the operating position of the filter head and control means allows the device to be arranged to reduce or eliminate improper device orientation which could lead to repetitive motion injury. In addition, the angular relationship between the filtration head and control means can be adjusted by pivoting one or both of those components on the handle means **54**. This allows use of the inverse filtration device **52** in different operating positions and under various operating conditions, such as where there may be low overhead clearance, for example, when the device is being operated under a hood or other ventilation apparatus.

Referring now to Figures 3 and 4, the handle means can optionally include a slot or track **68** which allows the spacing between the filtration head **60** and the control means **62** to be adjusted to accommodate different user hand sizes and/or individual preferences when the device is hand held and operated. In particular, control means **62** is attached to handle means **54** by way of a threaded bolt **66** which extends through the slot **68** and engages a complementarily threaded receiving seat in the control means. When control means **62** is positioned at the top end **70** of slot **68**, the spacing between the control means and filtration head **60** is maximized. When the control means is positioned at the bottom end **72** of slot **68**, the spacing between the control means and the filtration head is minimized.

The handle means, control means and inverse filtration head are constructed from suitable materials selected for low overall weight and resistivity to common chemical reagents. In addition, the design and function of control means **62** can be kept relatively simple by limiting the amount of operational actuation controls that are included thereon. In one embodiment, such as the device depicted in Figures 2-5, the control means includes three actuation switches **64**, wherein the switches are respectively used to actuate external vacuum means, gas delivery means and fluid delivery means in washing operations conducted during chemical syntheses. Selection of different solvents to be delivered via the filtration head can be easily accomplished by a switching junction associated with the external fluid delivery means, or arranged between the fluid delivery means and the filtration head.

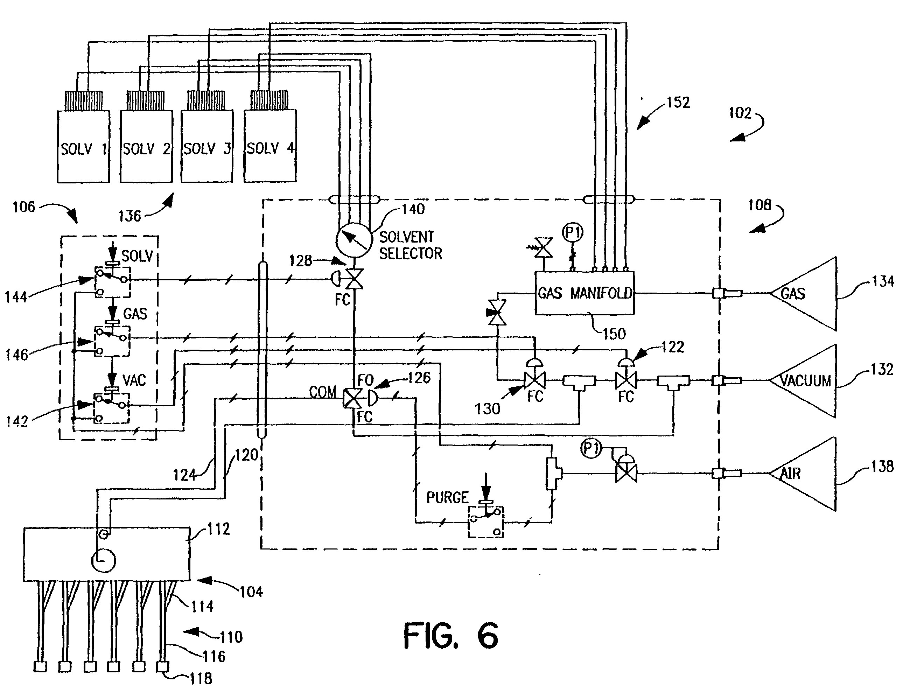

In a further embodiment, an inverse filtration apparatus is provided. The apparatus includes an inverse filtration device such as the device described above and depicted in Figures 2-5, a valve box which is operably connected to the control means of the filtration device and a source of vacuum, a gas delivery means and a solvent delivery means. The inverse filtration apparatus is generally indicated by **102** in Figure 6. The filtration apparatus can include any suitable inverse filtration head, such as the filtration heads depicted in Figures 1 and 7. However, in the apparatus of Figure 6, a filtration head similar to that of Figure 7 is depicted. The inverse filtration head **104** thus includes a plurality of effluent/influent conduit pairs **110** arranged in spaced-apart relation to each other within a manifold body **112**. Each conduit pair **110** comprises an influent conduit **114,** an effluent conduit **116** and a filter means **118** arranged on the downstream terminus of the effluent conduit. The manifold body **112** includes a radial, multiposition solvent spitter in fluid communication with the effluent conduits of each conduit pair **110**, and an internal chamber in fluid communication with the influent conduits of each conduit pair.

The internal chamber of the manifold body **112** is also in fluid communication with tubing line **120** which communicates the chamber with a valve box, generally indicated at **108**. More particularly, tubing line **120** communicates with a first valve **122**, such as a multi-position switchable valve, that in turn is in communication with an externally associated source of vacuum **132**. When valve **122** is actuated, fluids from a reaction vessel can be aspirated through effluent conduit **116** of the influent/effluent conduit pairs. The aspirated fluids pass from the conduit pairs into the internal chamber of manifold body **112,** through tubing line **120** and into valve box **108**, whereafter the fluids are passed to an associated waste receptacle.

The solvent splitter of manifold body **112** is in fluid communication with tubing line **124** which communicates the splitter with valve box **108**. Tubing line **124** communicates directly with multi-position valve **126** and indirectly with second valve **128** and third valve **130**. Third valve **130** is in communication with external vacuum source **132**, as well as with an externally associated gas delivery means **134**. Second valve **128** is in communication with an externally associated fluid delivery means, generally indicated at **136**. When third valve **130** is actuated, gas passes from gas delivery means **134**, through the third valve and tubing line **124**, into the solvent splitter of manifold body **112**. From the solvent splitter, the gas travels through influent conduit **114** of the influent/effluent conduit pairs **110**, for delivery into a reaction vessel. In this manner, the gas can be used as an effervescent to dispel fluids from the influent conduit, as well as to agitate or mix the contents of the reaction vessel. When second valve **128** is actuated, solvents or other fluids pass from fluid delivery means **136**, through the second valve and tubing line **124**, and into the solvent splitter of the manifold body. The fluids are then available for delivery into reaction vessels via influent conduit **114** of the influent/effluent conduit pairs. This allows washing liquids and fluid reagents to be added to reaction vessels during chemical syntheses. Optionally, a solvent selector **140** can be mounted on valve box **108** which allows selection between various reservoirs of fluid reagents and wash liquids which are to be delivered from fluid delivery means **136**.

The operations of the inverse filtration apparatus **102** are conveniently selected through actuation means located on a control means **106** that is associated with the inverse filtration head **104**. More particularly, a first actuation means **142** allows the remote actuation of first valve **122**, a second actuation means **144** allows remote actuation of second valve **128**, and a third actuation means **146** allows remote actuation of third valve **130.** The actuation means **142, 144**, and **146** generally comprise two-position switches that actuate the valves **122, 128**, and **130**, such as when the valves are solenoid actuated valves operably connected to corresponding actuation means on control means **106**.

Operation of the valve box **108** is preferably effected using pneumatic pressure. The use of pneumatic pressure as the motive force for actuation of each valve, and the delivery of solvents from the fluid delivery means **136,** avoids the use of electrical power in the valve box and concomitant use of electrical connections and actuation switches in the control means **106**. By eliminating the need for electrical power in both the operative portion of the apparatus and in the valve box itself, the risk of explosion and/or combustion of the various volatile reagents commonly used in chemical syntheses is eliminated. Accordingly, the valve box **108** can optionally include a gas manifold **150** which provides pneumatic motive force to expel fluids from the fluid delivery means. Gas manifold **150** is thus communicated with solvent reservoirs in fluid delivery means **136** by way of suitable tubing lines, generally indicated at **152**. In this manner, the gas delivery means **134** can be used to charge the solvent reservoirs and provide a suitable motive potential for delivery of fluids through valve box **108** and to inverse filtration head **104**.

The valve box **108** of the inverse filtration apparatus **102** can further include a pressure regulator that allows high pressure operations, for example up to about 138 kPa (20 psi) for blowing out clogged filters or frits using compressed gas, and normal solvent delivery pressures, for example less than about 103.5 kPa (15 psi).

In yet a further embodiment of the invention, an automated inverse filtration apparatus is provided. The automated apparatus includes an inverse filtration head such as the filtration head depicted in either Figure 1 or Figure 7; actuation means operably connecting the filtration head with external devices such as vacuum means, gas delivery means, fluid receiving means, and fluid delivery means; and an automated positioning arm which is used to manipulate the filtration head. These components collectively provide a work station where chemical syntheses can be carried out.

More particularly, a work station is provided by mounting an inverse filtration head on an automated arm that is movable along an axis for raising and lowering the arm. Actuation means, which may be physically mounted on the filtration head, are used to switchably direct fluid communication between external devices and the filtration head to direct gas and/or fluid delivery to and from the filtration head for carrying out chemical syntheses.

Travel of the automated arm can be adjusted over a wide range along the z-axis in order to allow the influent/effluent conduit pairs to be moved into, and out of an array of reaction vessels arranged within the work station. A conveyor platform, horizontally movable along the x-axis in the work station, is used to index rows of reaction vessels into, and out of, position with the automated arm. In this manner, individual rows of vessels in an array can be sequentially treated with the inverse filtration head.

Operation of the automated apparatus is carried out using a control unit which coordinates movement of the automated arm and the indexing platform, and mediates, via the actuation means, the controlled delivery and/or extraction of reagents, gasses and solvents, as well as application of vacuum, to and from the rows of reaction vessels to allow for fully automated treatment of a vial array. The control unit can be a microprocessor which is programmed to direct travel of the automated arm, movement of the indexing platform, and operate the actuation means, all according to user-specified settings.

The work station can further include a wash trough located at one of the extremes of the x-axis on the indexing platform. The trough can contain a suitable rinsing or washing solution to provide a washing position for the conduit pairs, such as where it is desired to remove residual solvents or reagents between operations conducted on different rows in the vessel array. The ability to provide such an automated washing step avoids cross-contamination between rows of reaction vessels during chemical syntheses. As will be appreciated by those skilled in the art upon reading this specification, the automated apparatus can be alternatively configured to work with a carousel-type conveyor platform for rotating arrays of reaction vessels into position with the automated arm about a central axis.

### Example 1

### Synthesis Protocol Using Inverse Filtration Head

The inverse filtration apparatus is used in a protocol for converting a resin bound acid into 96 individual ureas via the Curtius reaction. The synthesis uses 50 mg of resin with a loading of about 0.5 mM/gram (roughly equal to about 0.025 mM/reaction vessel).

### I. Isocyanate Formation:

Ninety-six 4 mL vials are placed into a 96 vessel array heating block, and 50 mg of resin is placed into each vial using a powder filling gun. Using a repeating or adjustable multichannel pipetter, each vial is filled with 1 mL anhydrous benzene and 35 µL triethylamine (20 equivalents). Finally, 50 µL Diphenylphosphorylazide (20 equivalents) is added. Due to the anhydrous nature of the reaction, the vials are filled quickly in sets of 32, and a 1/3 cover plate with a TEFLON® seal is clamped onto the filled vials. When all vials are filled, and their respective cover plates are attached, the 96 vessel array block is placed into a dry block heater fastened to a gyrotory shaker. The vessels are then heated to 75°C and shaken for 2 hours.

### II. Rinsing:

The 96 vessel array block is then removed from the heater, the cover plates removed, and the block is placed on a platform next to the inverse filtration apparatus. The vacuum button is actuated as the inverse filtration apparatus is lowered into the first row of vials, until the solution in the vials is completely aspirated through the effluent conduits. The vacuum button is released, the solvent selector is set to position 1 (corresponding to tetrahydrofuran, THF), and the solvent is added from the influent conduits to fill approximately 1/3 of the vial with THF using a circular motion of the conduits against the edge of the vials to rinse down the sides of the vials thoroughly. The inverse filtration apparatus is placed with the frits resting on the bottom of the vials and the pressurized gas (e.g., argon or other suitable gas) button is actuated to provide mixing if desired. Alternatively, delivery of gas through the frits can be used to help keep the frits clean, for example by clearing blocked frits using the pressurized gas to dislodge the blockage. The vials are then aspirated by repeating the procedure described above to complete a first rinse cycle, and the above-described rinse cycle is repeated using THF. The solvent selector is next switched to position 2, and the rinse cycle is repeated two times with methylene chloride. At this point, argon is applied to remove any resin clinging to the frit. If there is any remaining resin on the inverse filtration apparatus, the influent/effluent conduit pairs can be dipped into a trough of dimethylformamide or methanol while applying the argon button. This procedure of 4 washes is continued through all the rows. Since the isocyanate is very stable on resin, the vials can be open to the atmosphere for up to one hour. When the inverse filtration device has been used to complete rinsing of all 96 vials, a backflush button is depressed on the valve box which removes the selected solvent from the chamber in the manifold body of the inverse filtration apparatus and the fluid lines that connect the chamber with the solvent source. This prevents dripping and allows the inverse filtration apparatus to be disconnected from the fluid lines without solvent leakage.

### III. Urea Formation:

Using a repeating pipetter, 1 mL THF is added to 32 vials followed by 20 equivalents of 32 different amines and the cover plate is fastened. This is repeated for the remaining 64 vials, and the 96 vessel array heating block is placed back into the 75°C heater with shaking for 8 hours.

### IV. Final Rinsing:

The procedure outlined in section II above is followed by rinses with the following solvents: dimethylformamide (twice), water (twice), dimethylformamide (twice), methylene chloride (twice), methanol (twice), and diethyl ether (twice). As the inverse filtration head is configured to be connected with four solvents, washes with additional solvents can be achieved by changing the solvent bottles if the solvent is used infrequently, or having the valve box configured to handle the extra number of solvents if used on a frequent basis.

The resin is ready at this point to cleave or to carry on into further syntheses.

## Claims

1. An inverse filtration head for gas and fluid handling, comprising:
(a) a plurality of coaxial conduit pairs in substantially parallel spaced-apart relationship, each conduit pair comprising (i) an influent conduit having a first and a second terminus and an inlet aperture arranged proximal to said second terminus, and (ii) an effluent conduit disposed coaxially within the influent conduit and having a first and a second terminus, wherein the first terminus of the effluent conduit extends beyond the first terminus of the influent conduit and includes a filter through which nonparticulate fluids may freely pass; and
(b) a manifold body comprising a plurality of coaxial coupling seats which hold and retain the second termini of the coaxial conduit pairs.

2. The filtration head of claim 1 wherein the manifold body comprises upper and lower internal chambers, and further wherein:
the upper chamber includes means for communicating with an external vacuum source, an external gas delivery means and an external fluid receiving means, and a plurality of ports in fluid communication with the second termini of the effluent conduits so as to enable passage of gases and fluids between the effluent conduits, the upper chamber and the external vacuum means, external gas delivery means and external fluid receiving means; and
the lower chamber comprises means for communicating with external fluid delivery means and a plurality of ports in fluid communication with the inlet apertures of the influent conduits, to enable passage of fluids from the external fluid delivery means, through the lower chamber and into the influent conduits.

3. The filtration head of claim 1 wherein the conduit pairs comprise concentric stainless steel tubes.

4. The filtration head of claim 1 wherein the filter comprises a stainless steel screen.

5. The filtration head of claim 1 wherein the manifold body is comprised of a polymeric material.

6. The filtration head of claim 5 wherein the polymeric material is chemically inert.

7. The filtration head of claim 6 wherein the polymeric material is polyethylene.

8. The filtration head of claim 6 wherein the polymeric material is a high density polyethylene.

9. The filtration head of claim 6 wherein the polymeric material is poly(tetrafluoroethylene).

10. The filtration head of claim 6 wherein the polymeric material is poly(chlorotrifluoroethylene).

11. The filtration head of claim 6 wherein the polymeric material is polyether ester ketone.

12. An inverse filtration device, comprising:
(a) elongate handle means having first and second ends;
(b) the filtration head of claim 1 attached to the first end of the handle means; and
(c) control means attached to the second end of the handle means, wherein said control means comprises actuation means operably connected to the external vacuum means, external gas delivery means, external fluid receiving means and the external fluid delivery means, thereby allowing remote actuation of vacuum, gas delivery or fluid delivery from said external means to the filtration head.

13. The filtration device of claim 12, wherein the filtration head and the control means are each pivotably attached to the handle means.

14. The filtration device of claim 13, wherein the control means is further adjustably attached to the handle means such that the control means can be positioned thereon in a plurality of positions relative to the filtration head.

15. The filtration device of claim 12, wherein the actuation means comprises a first switch capable of actuating the external vacuum means, a second switch capable of actuating the external gas delivery means and a third switch capable of actuating the external fluid delivery means.

16. The inverse filtration device of claim 12, further comprising:
(d) a valve box comprising (i) a first valve operably connected to and actuated by the control means and in fluid communication with an associated fluid delivery means, a source of gas pressure and a first tubing means enabling communication between said first valve and the lower chamber of the manifold, (ii) a second valve operably connected to and actuated by the control means and in fluid communication with an associated vacuum source and a second tubing means enabling communication of said second valve with the upper chamber of the manifold, and (iii) a third valve operably connected to and actuated by the control means and in fluid communication with an associated gas delivery means and a third tubing means enabling communication of said third valve with the upper chamber of the manifold.

17. The device of claim 16, wherein the first valve is in communication with an associated fluid delivery means capable of delivering a plurality of different solvents to the lower chamber of the manifold.

18. The device of claim 16, wherein the elongated handle means is mounted on an automated arm that is capable of moving said elongated handle means along a vertical axis.

19. An inverse filtration head for gas and fluid handling, comprising:
(a) a plurality of conduit pairs in substantially parallel spaced-apart relationship, each conduit pair comprising (i) an influent conduit having an upstream and a downstream terminus, and (ii) an effluent conduit having an exterior surface and an upstream and a downstream terminus, wherein the major axis of the influent conduit is transverse to the major axis of the effluent conduit and the downstream terminus of the influent conduit is arranged near an upper portion of the effluent conduit to enable discharge from the downstream terminus of the influent conduit to travel along a portion of the exterior surface of the effluent conduit thereby to remove residues from the exterior surface of the effluent conduit;
(b) a filter means disposed over the downstream terminus of the effluent conduit and through which nonparticulate fluids may freely pass; and
(c) a manifold body comprising a plurality of coupling seats which hold and retain the conduit pairs.

20. The filtration of claim 19 wherein the manifold body comprises an internal chamber which includes means for communication with an external vacuum source, an external gas delivery means and an external fluid receiving means, and a plurality of ports in fluid communication with the upstream termini of the effluent conduits so as to enable passage of gases and fluids between the effluent conduits, the chamber and the external vacuum means, external gas deliver means and external fluid receiving means.

21. The filtration head of claim 19, wherein the manifold body comprises a radial solvent splitter which includes means for communicating with external fluid delivery means, and further wherein said solvent splitter communicates with the upstream termini of the influent conduits and enables passage of fluids from the external fluid delivery means into the influent conduits.

22. The filtration head of claim 21, the radial solvent splitter comprises an integral check valve.

23. An inverse filtration device, comprising:
(a) elongate handle means having first and second ends;
(b) the filtration head of claim 22 attached to the first end of the handle means; and
(c) control means attached to the second end of the handle means, comprising actuation means operably connected to the external vacuum means, external gas delivery means, external fluid receiving means and the external fluid delivery means, thereby allowing remote actuation of vacuum, gas delivery or fluid delivery from said external means to the filtration head.

24. The filtration device of claim 23, wherein the filtration head and the control means are each pivotably attached to the handle means.

25. The filtration device of claim 24, wherein the control means is also adjustably attached to the handle means such that the control means can be positioned thereon in a plurality of positions relative to the filtration head.

26. The filtration device of claim 23, wherein the actuation means comprises a first switch capable of actuating the external vacuum means, a second switch capable of actuating the external gas delivery means and a third switch capable of actuating the external fluid delivery means.

27. The inverse filtration device of claim 23, further comprising:
(d) a valve box comprising (i) a first valve operably connected to and actuated by the control means and in fluid communication with an associated fluid delivery means, a source of gas pressure and a first tubing means enabling communication between said first valve and the radial solvent splitter, (ii) a second valve operably connected to and actuated by the control means and in fluid communication with an associated vacuum source and a second tubing means enabling communication of said second valve with the manifold chamber, and (iii) a third valve operably connected to and actuated by the control means and in fluid communication with an associated gas delivery means and a third tubing means enabling communication of said third valve with the manifold chamber.

28. The device of claim 27, wherein the first valve is in communication with an associated fluid delivery means capable of delivering a plurality of different solvents to the radial solvent splitter.

29. The device of claim 27, wherein the inverse elongated handle means is mounted on an automated arm that is capable of moving said elongated handle means along a vertical axis.

## Patentansprüche

1. Inverser Filtrationskopf für Gas- und Fluidbehandlung, umfassend:
(a) eine Mehrzahl von koaxialen Leitungspaaren in im wesentlichen paralleler voneinander beabstandeter Beziehung, wobei jedes Leitungspaar (i) eine Zuflussleitung, die ein erstes und ein zweites Ende und eine proximal zu dem zweiten Ende angeordnete Einlassöffnung hat, und (ii) eine Abflussleitung, die koaxial innerhalb der Zuflussleitung angeordnet ist und ein erstes und zweites Ende hat, umfasst, worin sich das erste Ende der Abflussleitung über das erste Ende der Zuflussleitung hinaus erstreckt und ein Filter enthält, durch das nichtteilchenförmige Fluide frei hindurchgehen können; und
(b) einen Verteilerkörper, der eine Mehrzahl von koaxialen Kupplungssitzen umfasst, welche die zweiten Enden der koaxialen Leitungspaare halten bzw. fassen und zurückhalten.

2. Filtrationskopf nach Anspruch 1, worin der Verteilerkörper eine obere und untere innere Kammer umfasst, und worin weiter:
die obere Kammer ein Mittel für die Verbindung mit einer äußeren Vakuum- bzw. Unterdruckquelle, einem äußeren Gasabgabemittel und einem äußeren Fluidaufnahmemittel, sowie eine Mehrzahl von Durchlässen in Fluidverbindung mit den zweiten Enden der Abflussleitungen enthält, so dass ein Durchgang von Gasen und Fluiden zwischen den Abflussleitungen, der oberen Kammer und dem äußeren Vakuum- bzw. Unterdruckmittel, dem äußeren Gasabgabemittel und dem äußeren Fluidaufnahmemittel ermöglicht wird; und
die untere Kammer ein Mittel zur Verbindung mit einem äußeren Fluidabgabemittel und eine Mehrzahl von Durchlässen in Fluidverbindung mit den Einlassöffnungen der Zuflussleitungen umfasst, um einen Durchgang von Fluiden von dem äußeren Fluidabgabemittel, durch die untere Kammer und in die Zuflussleitungen zu ermöglichen.

3. Filtrationskopf nach Anspruch 1, worin die Leitungspaare konzentrische rostfreie Stahlrohre umfassen.

4. Filtrationskopf nach Anspruch 1, worin das Filter ein rostfreies Stahlsieb bzw. -gitter umfasst.

5. Filtrationskopf nach Anspruch 1, worin der Verteilerkörper aus Polymermaterial besteht.

6. Filtrationskopf nach Anspruch 5, worin das Polymermaterial chemisch inert ist.

7. Filtrationskopf nach Anspruch 6, worin das Polymermaterial Polyethylen ist.

8. Filtrationskopf nach Anspruch 6, worin das Polymermaterial Polyethylen hoher Dichte ist.

9. Filtrationskopf nach Anspruch 6, worin das Polymermaterial Poly(tetrafluorethylen) ist.

10. Filtrationskopf nach Anspruch 6, worin das Polymermaterial Poly(chlortrifluorethylen) ist.

11. Filtrationskopf nach Anspruch 6, worin das Polymermaterial Polyetheresterketon ist.

12. Inverse Filtrationseinrichtung, umfassend:
(a) ein langgestrecktes Handgriffmittel, das ein erstes und zweites Ende hat;
(b) den an dem ersten Ende des Handgriffmittels angebrachten Filtrationskopf des Anspruchs 1; und
(c) ein an dem zweiten Ende des Handgriffmittels angebrachtes Steuer- bzw. Regelmittel, worin das Steuer- bzw. Regelmittel ein betriebsfähig mit dem äußeren Vakuum- bzw. Unterdruckmittel, dem äußeren Gasabgabemittel, dem äußeren Fluidaufnahmemittel und dem äußeren Fluidabgabemittel verbundenes Betätigungsmittel umfasst, so dass dadurch eine Fernbetätigung des Vakuums bzw. Unterdrucks, der Gasabgabe oder der Fluidabgabe von dem genannten äußeren Mittel zu dem Filtrationskopf ermöglicht wird.

13. Filtrationseinrichtung nach Anspruch 12, worin der Filtrationskopf und das Steuer- bzw. Regelmittel je dreh- bzw. verschwenkbar an dem Handgriffmittel angebracht ist.

14. Filtrationseinrichtung nach Anspruch 13, worin das Steuer- bzw. Regelmittel weiter derart einstellbar an dem Handgriffmittel angebracht ist, dass das Steuer- bzw. Regelmittel darauf in einer Mehrzahl von Positionen relativ zu dem Filtrationskopf positioniert werden kann.

15. Filtrationseinrichtung nach Anspruch 12, worin das Betätigungsmittel einen ersten Schalter, der zum Betätigen des äußeren Vakuum- bzw. Unterdruckmittels fähig ist, einen zweiten Schalter, der zum Betätigen des äußeren Gasabgabemittels fähig ist, und einen dritten Schalter, der zum Betätigen des äußeren Fluidabgabemittels fähig ist, umfasst.

16. Inverse Filtrationseinrichtung nach Anspruch 12, weiter umfassend:
(d) einen Ventilkasten, umfassend (i) ein erstes Ventil, das betriebsfähig mit dem Steuer- bzw. Regelmittel verbunden ist und durch das Steuer- bzw. Regelmittel betätigt wird und sich in Fluidverbindung mit einem zugeordneten Fluidabgabemittel, einer Quelle von Gasdruck und einem ersten Rohr- bzw. Schlauchleitungsmittel, das eine Verbindung zwischen dem ersten Ventil und der unteren Kammer des Verteilers ermöglicht, befindet, (ii) ein zweites Ventil, das betriebsfähig mit dem Steuer- bzw. Regelmittel verbunden ist und durch das Steuer- bzw. Regelmittel betätigt wird und sich in Fluidverbindung mit einer zugeordneten Vakuum- bzw. Unterdruckquelle und einem zweiten Rohr- bzw. Schlauchleitungsmittel, das eine Verbindung des zweiten Ventils mit der oberen Kammer des Verteilers ermöglicht, befindet, und (iii) ein drittes Ventil, das betriebsfähig mit dem Steuer- bzw. Regelmittel verbunden ist und durch das Steuer- bzw. Regelmittel betätigt wird und sich in Fluidverbindung mit einem zugehörigen Gasabgabemittel und einem dritten Rohr- bzw. Schlauchleitungsmittel, welches eine Verbindung des dritten Ventils mit der oberen Kammer des Verteilers ermöglicht, befindet.

17. Einrichtung nach Anspruch 16, worin das erste Ventil in Verbindung mit einem zugehörigen Fluidabgabemittel ist, welches fähig ist, eine Mehrzahl von unterschiedlichen Lösungsmitteln an die untere Kammer des Verteilers abzugeben.

18. Einrichtung nach Anspruch 16, worin das langgestreckte Handgriffmittel auf einem automatisierten Arm angebracht ist, der fähig ist, das langgestreckte Handgriffmittel längs einer vertikalen Achse zu bewegen.

19. Inverser Filtrationskopf für Gas- und Fluidbehandlung, umfassend:
(a) eine Mehrzahl von Leitungspaaren in im wesentlichen paralleler, voneinander beabstandeter Beziehung, wobei jedes Leitungspaar (i) eine Zuflussleitung, die ein stromaufwärtiges und ein stromabwärtiges Ende hat, und (ii) eine Abflussleitung, die eine äußere Oberfläche und ein stromaufwärtiges sowie ein stromabwärtiges Ende hat, umfasst, worin die Hauptachse der Zuflussleitung quer zu der Hauptachse der Abflussleitung ist und das stromabwärtige Ende der Zuflussleitung nahe einem oberen Teil der Abflussleitung angeordnet ist, um es der Entladung aus dem stromabwärtigen Ende der Zuflussleitung zu ermöglichen, sich längs eines Teils der äußeren Oberfläche der Abflussleitung zu bewegen, um dadurch Reste von der äußeren Oberfläche der Abflussleitung zu entfernen;
(b) ein Filtermittel, das über dem stromabwärtigen Ende der Abflussleitung angeordnet ist und durch welches nichtteilchenförmige Fluide frei hindurchgehen können; und
(c) einen Verteilerkörper, der eine Mehrzahl von Kupplungssitzen umfasst, welche die Leitungspaare enthalten bzw. fassen und zurückhalten.

20. Filtration nach Anspruch 19, worin der Verteilerkörper eine innere Kammer umfasst, welche ein Mittel für die Verbindung mit einer äußeren Vakuum- bzw. Unterdruckquelle, einem äußeren Gasabgabemittel und einem äußeren Fluidaufnahmemittel und eine Mehrzahl von Durchlässen in Fluidverbindung mit den stromaufwärtigen Enden der Abflussleitungen umfasst, so dass ein Durchgang von Gasen und Fluiden zwischen den Abflussleitungen, der Kammer und dem äußeren Vakuum- bzw. Unterdruckmittel, dem äußeren Gasabgabemittel und dem äußeren Fluidaufnahmemittel ermöglicht wird.

21. Filtrationskampf nach Anspruch 19, worin der Verteilerkörper einen radialen Lösungsmittelsplitter bzw. -strömungsteiler umfasst, welcher ein Mittel zur Verbindung mit einem äußeren Fluidabgabemittel umfasst, und worin weiter der Lösungsmittelsplitter bzw. -strömungsteiler mit den stromaufwärtigen Enden der Zuflussleitungen in Verbindung steht und einen Durchgang von Fluiden von dem äußeren Fluidabgabemittel in die Zuflussleitungen ermöglicht

22. Filtrationskopf nach Anspruch 21, worin der radiale Lösungsmittelsplitter bzw. -strömungsteiler ein integrales Rückschlagventil umfasst.

23. Inverse Filtrationseinrichtung, umfassend:
(a) ein langgestrecktes Handgriffmittel, das ein erstes und zweites Ende hat;
(b) den Filtrationskopf des Anspruchs 22, der an dem ersten Ende des Handgriffmittels angebracht ist; und
(c) ein an dem zweiten Ende des Handgriffmittels angebrachtes Steuer- bzw. Regelmittel, umfassend ein betriebsfähig mit dem äußeren Vakuum- bzw. Unterdruckmittel, dem äußeren Gasabgabemittel, dem äußeren Fluidaufnahmemittel und dem äußeren Fluidabgabemittel verbundenes Betätigungsmittel, so dass dadurch eine Fernbetätigung des Vakuums bzw. Unterdrucks, der Gasabgabe oder Fluidabgabe von dem genannten äußeren Mittel zu dem Filtrationskopf ermöglicht wird.

24. Filtrationseinrichtung nach Anspruch 23, worin der Filtrationskopf und das Steuer- bzw. Regelmittel je dreh- bzw. verschwenkbar an dem Handgriffmittel angebracht ist.

25. Filtrationseinrichtung nach Anspruch 24, worin das Steuer- bzw. Regelmittel außerdem derart einstellbar an dem Handgriffmittel angebracht ist, dass das Steuer- bzw. Regelmittel darauf in einer Mehrzahl von Positionen relativ zu dem Filtrationskopf positioniert werden kann.

26. Filtrationseinrichtung nach Anspruch 23, worin das Betätigungsmittel einen ersten Schalter, der zum Betätigen des äußeren Vakuum- bzw. Unterdruckmittels fähig ist, einen zweiten Schalter, der zum Betätigen des äußeren Gasabgabemittels fähig ist, und einen dritten Schalter, der zum Betätigen des äußeren Fluidabgabemittels fähig ist, umfasst.

27. Inverse Filtrationseinrichtung nach Anspruch 23, weiter umfassend:
(d) einen Ventilkasten, umfassend (i) ein erstes Ventil, das betriebsfähig mit dem Steuer- bzw. Regelmittel verbunden ist und durch das Steuer- bzw. Regelmittel betätigt wird und sich in Fluidverbindung mit einem zugeordneten Fluidabgabemittel, einer Quelle von Gasdruck und einem ersten Rohr- bzw. Schlauchleitungsmittel, das eine Verbindung zwischen dem ersten Ventil und dem radialen Lösungsmittelsplitter bzw. -strömungsteiler ermöglicht, befindet, (ii) ein zweites Ventil, das betriebsfähig mit dem Steuer- bzw. Regelmittel verbunden ist und durch das Steuer- bzw. Regelmittel betätigt wird und sich in Fluidverbindung mit einer zugeordneten Vakuum- bzw. Unterdruckquelle und einem zweiten Rohr-bzw. Schlauchleitungsmittel, das eine Verbindung des zweiten Ventils mit der Verteilerkammer ermöglicht, befindet, und (iii) ein drittes Ventil, das betriebsfähig mit dem Steuer-bzw. Regelmittel verbunden ist und durch das Steuer- bzw. Regelmittel betätigt wird und sich in Fluidverbindung mit einem zugehörigen Gasabgabemittel und einem dritten Rohr- bzw. Schlauchleitungsmittel, welches eine Verbindung des dritten Ventils mit der Verteilerkammer ermöglicht, befindet.

28. Einrichtung nach Anspruch 27, worin das erste Ventil in Verbindung mit einem zugehörigen Fluidabgabemittel ist, welches fähig ist, eine Mehrzahl von unterschiedlichen Lösungsmitteln an den radialen Lösungsmittelsplitter bzw. -strömungsteiler abzugeben.

29. Einrichtung nach Anspruch 27, worin das inverse langgestreckte Handgriffmittel auf einem automatisierten Arm angebracht ist, der fähig ist, das langgestreckte Handgriffmittel längs einer vertikalen Achse zu bewegen.

## Revendications

1. Tête de filtration inverse pour le traitement de gaz et de liquides, comprenant :
(a) une pluralité de paires de conduits coaxiaux séparées, sensiblement parallèles les unes aux autres, chaque paire de conduits comprenant (i) un conduit d'affluents ayant une première et une seconde extrémités, et une ouverture d'admission disposée en amont de la seconde extrémité, et (ii) un conduit d'effluents disposé en position coaxiale par rapport au conduit d'affluents et ayant une première et une seconde extrémités, la première extrémité du conduit d'effluents s'étendant au-delà de la première extrémité du conduit d'affluents et comprenant un filtre à travers lequel les fluides non particulaires peuvent passer librement ; et
(b) un corps collecteur comprenant une pluralité de sièges de couplage coaxiaux qui supportent et maintiennent les secondes extrémités des paires de conduits coaxiaux.

2. Tête de filtration de la revendication 1, dans laquelle le corps collecteur comprend des chambres internes supérieure et inférieure, et en outre dans laquelle :
la chambre supérieure comprend un moyen de communication avec une source de vide extérieure, un moyen de délivrance de gaz extérieur et un moyen de réception de fluide extérieur, et une pluralité d'orifices en communication de fluide avec les secondes extrémités des conduits d'effluents, de façon à permettre le passage de gaz et de fluides entre les conduits d'effluents, la chambre supérieure et le moyen de vide extérieur, le moyen de délivrance de gaz extérieur et le moyen de réception de fluide extérieur ; et
la chambre inférieure comprend un moyen de communication avec le moyen de délivrance de fluide extérieur et une pluralité d'orifices en communication de fluide avec les orifices d'admission des conduits d'affluents, pour permettre le passage des fluides venant du moyen de délivrance de fluide extérieur, par la chambre inférieure et dans les conduits d'affluents.

3. Tête de filtration selon la revendication 1, dans laquelle les paires de conduits comprennent des tubes en acier inoxydable concentriques.

4. Tête de filtration selon la revendication 1, dans laquelle le filtre comprend un tamis en acier inoxydable.

5. Tête de filtration selon la revendication 1, dans laquelle le corps collecteur est constitué d'un matériau polymère.

6. Tête de filtration selon la revendication 5, dans laquelle le matériau polymère est chimiquement inerte.

7. Tête de filtration selon la revendication 6, dans laquelle le matériau polymère est du polyéthylène.

8. Tête de filtration selon la revendication 6, dans laquelle le matériau polymère est du polyéthylène haute densité.

9. Tête de filtration selon la revendication 6, dans laquelle le matériau polymère est du poly(tétrafluoroéthylène).

10. Tête de filtration selon la revendication 6, dans laquelle le matériau polymère est du poly(chlorotrifluoroéthylène).

11. Tête de filtration selon la revendication 6, dans laquelle le matériau polymère est une polyéther ester cétone.

12. Dispositif de filtration inverse, comprenant :
(a) un moyen formant poignée allongée comportant une première et une seconde extrémités ;
(b) la tête de filtration de la revendication 1 fixée à la première extrémité du moyen formant poignée ; et
(c) des moyens de commande fixés à la seconde extrémité des moyens formant poignées, lesdits moyens de commande comprenant des moyens d'actionnement reliés de façon opérationnelle au moyen de vide extérieur, au moyen de délivrance de gaz extérieur, au moyen de réception de fluide extérieur, et au moyen de délivrance de fluide extérieur, permettant ainsi la commande à distance du vide, de la délivrance de gaz ou de la délivrance de fluides, à partir desdits moyens extérieurs, à la tête de filtration.

13. Dispositif de filtration selon la revendication 12, dans lequel la tête de filtration et les moyens de commande sont chacun fixés au moyen formant poignée de façon à pouvoir pivoter.

14. Dispositif de filtration selon la revendication 13, dans lequel les moyens de commande sont en outre fixés au moyen formant poignée de façon à pouvoir être ajustés de telle sorte que les moyens de commande puissent être placés dessus selon plusieurs positions par rapport à la tête de filtration.

15. Dispositif de filtration selon la revendication 12, dans lequel les moyens d'actionnement comprennent un premier interrupteur capable d'actionner le moyen de vide extérieur, un second interrupteur capable d'actionner le moyen de délivrance de gaz extérieur et un troisième interrupteur capable d'actionner le moyen de délivrance de fluide extérieur.

16. Dispositif de filtration inverse selon la revendication 12, comprenant en outre :
(d) une boîte de soupapes comprenant (i) une première soupape reliée de façon opérationnelle aux moyens de commande et actionnée par ceux-ci et en communication de fluide avec un moyen de délivrance de fluide associé, une source de pression de gaz et un premier moyen de tuyauterie permettant la communication entre ladite première soupape et la chambre inférieure du collecteur, (ii) une seconde soupape reliée de façon opérationnelle aux moyens de commande et actionnée par ceux-ci et en communication de fluide avec une source de vide associée et un second moyen de tuyauterie permettant la communication de ladite seconde soupape avec la chambre supérieure du collecteur, et (iii) une troisième soupape reliée de façon opérationnelle aux moyens de commande et actionnée par ceux-ci et en communication de fluide avec un moyen de délivrance de gaz associé et un troisième moyen de tuyauterie permettant la communication de ladite troisième soupape avec la chambre supérieure du collecteur.

17. Dispositif selon la revendication 16, dans lequel la première soupape est en communication avec un moyen de délivrance de fluide associé capable de délivrer plusieurs solvants différents dans la chambre inférieure du collecteur.

18. Dispositif selon la revendication 16, dans lequel le moyen formant poignée allongée est monté sur un bras automatique qui est capable de déplacer ledit moyen formant poignée allongée le long d'un axe vertical.

19. Tête de filtration inverse pour le traitement de gaz et de fluides, comprenant :
(a) une pluralité de paires de conduits séparées, sensiblement parallèles les unes aux autres, chaque paire de conduits comprenant (i) un conduit d'affluents ayant une extrémité amont et une extrémité aval, et (ii) un conduit d'effluents ayant une surface extérieure et une extrémité amont et une extrémité aval, l'axe principal du conduit d'affluents étant transversal par rapport à l'axe principal du conduit d'effluents et l'extrémité aval du conduit d'affluents étant disposée près d'une partie supérieure du conduit d'effluents pour permettre à la sortie de l'extrémité aval du conduit d'affluents de se déplacer sur une partie de la surface extérieure du conduit d'effluents en retirant ainsi des résidus de la surface extérieure du conduit d'effluents ;
(b) un moyen formant filtre disposé sur l'extrémité aval du conduit d'effluents et à travers lequel des fluides non particulaires peuvent passer librement ; et
(c) un corps collecteur comprenant une pluralité de sièges de couplage qui supportent et maintiennent les paires de conduits.

20. Tête de filtration selon la revendication 19, dans laquelle le corps collecteur comprend une chambre interne qui comprend un moyen de communication avec une source de vide extérieur, un moyen de délivrance de gaz extérieur et un moyen de réception de fluide extérieur, et une pluralité d'orifices en communication de fluide avec les extrémités amont des conduits d'effluents de façon à permettre le passage de gaz et de fluides entre les conduits d'effluents, la chambre et le moyen de vide extérieur, le moyen de délivrance de gaz extérieur et le moyen de réception de fluide extérieur.

21. Tête de filtration selon la revendication 19, dans laquelle le corps collecteur comprend un répartiteur de solvant radial qui comprend un moyen de communication avec le moyen de délivrance de fluide extérieur, et en outre dans laquelle ledit répartiteur de solvant communique avec les extrémités amont des conduits d'affluents et permet le passage de fluides du moyen de délivrance de fluide extérieur dans les conduits d'affluents.

22. Tête de filtration selon la revendication 21, dans laquelle le répartiteur de solvant radial comprend une soupape d'arrêt intégrale.

23. Dispositif de filtration inverse, comprenant :
(a) un moyen formant poignée allongée comportant une première et une seconde extrémités ;
(b) la tête de filtration de la revendication 22 fixée à la première extrémité du moyen formant poignée ; et
(c) des moyens de commande fixés à la seconde extrémité du moyen formant poignée, comprenant des moyens d'actionnement reliés de façon opérationnelle au moyen de vide extérieur, au moyen de délivrance de gaz extérieur, au moyen de réception de fluide extérieur, et au moyen de délivrance de fluide extérieur, permettant ainsi la commande à distance du vide, de la délivrance de gaz ou de la délivrance de fluide à partir desdits moyens extérieurs à la tête de filtration.

24. Dispositif de filtration selon la revendication 23, dans lequel la tête de filtration et les moyens de commande sont tous deux fixés au moyen formant poignée de façon à pouvoir pivoter.

25. Dispositif de filtration selon la revendication 24, dans lequel les moyens de commande sont en outre fixés au moyen formant poignée de façon à pouvoir être ajustés de telle sorte que les moyens de commande puissent être placés dessus selon plusieurs positions par rapport à la tête de filtration.

26. Dispositif de filtration selon la revendication 23, dans lequel les moyens d'actionnement comprennent un premier interrupteur capable d'actionner le moyen de vide extérieur, un second interrupteur capable d'actionner le moyen de délivrance de gaz extérieur et un troisième interrupteur capable d'actionner le moyen de délivrance de fluide extérieur.

27. Dispositif de filtration inverse selon la revendication 23, comprenant en outre :
(d) une boîte de soupapes comprenant (i) une première soupape reliée de façon opérationnelle aux moyens de commande et actionnée par ceux-ci et en communication de fluide avec un moyen de délivrance de fluide associé, une source de pression de gaz et un premier moyen de tuyauterie permettant la communication entre ladite première soupape et le répartiteur de solvant radial, (ii) une seconde soupape reliée de façon opérationnelle aux moyens de commande et actionnée par ceux-ci et en communication de fluide avec une source de vide associée et un second moyen de tuyauterie permettant la communication de ladite seconde soupape avec la chambre du collecteur, et (iii) une troisième soupape reliée de façon opérationnelle aux moyens de commande et actionnée par ceux-ci et en communication de fluide avec un moyen de délivrance de gaz associé et un troisième moyen de tuyauterie permettant la communication de ladite troisième soupape avec la chambre du collecteur.

28. Dispositif selon la revendication 27, dans lequel la première soupape est en communication avec un moyen de délivrance de fluide associé capable de délivrer plusieurs solvants différents au répartiteur de solvant radial.

29. Dispositif selon la revendication 27, dans lequel le moyen formant poignée allongée est monté sur un bras automatique qui est capable de déplacer ledit moyen formant poignée allongée le long d'un axe vertical.
